Europäisches Patentamt

(19) European Patent Office    (11) Numéro de publication: **0 127 718**

Office européen des brevets                              **B1**

(12) **FASCICULE DE BREVET EUROPÉEN**

(45) Date de publication du fascicule du brevet:    (51) Int. Cl.⁴: **H 04 J 3/16,** H 04 J 3/17
   **18.03.87**

(21) Numéro de dépôt: **83430018.8**

(22) Date de dépôt: **07.06.83**

(54) Procédé de détection d'activité dans un système de transmission de la voix.

(43) Date de publication de la demande:
   **12.12.84 Bulletin 84/50**

(45) Mention de la délivrance du brevet:
   **18.03.87 Bulletin 87/12**

(84) Etats contractants désignés:
   **DE FR GB**

(56) Documents cité:
   **EP-A-0 015 363**

   **COMSAT TECHNICAL REVIEW, vol. 6, no. 1,
   printemps 1976, pages 127-158, Communications
   Satellite Corporation, Washington, DC, US S.J.
   CAMPANELLA: "Digital speech interpolation"
   COMSAT TECHNICAL REVIEW, vol. 6, no. 1,
   printemps 1976, pages 159-178, Communications
   Satellite Corporation, Washington, DC, USA J.A.
   JANKOWSKI JR.: "A new digital voice-activated
   switch"
   IEEE TRANSACTIONS ON COMMUNICATIONS,
   vol. COM-28, no. 3, mars 1980, pages 334-344, IEEE,
   New York, US R.V. COX et al.: "Multiple user
   variable rate coding for TASI and packet
   transmission systems"
   ALTA FREQUENZA, vol. 43, no. 9, septembre 1974,
   pages 682-418E - 689-425E, Milan, IT I. PORETTI et
   al.: "Use of digital speech interpolation equipment
   to increase the transmission capacity of
   telecommunication systems"**

(73) Titulaire: **International Business Machines
   Corporation, Old Orchard Road, Armonk, N.Y.
   10504 (US)**
(84) Etats contractants désignés: **DE GB**

(73) Titulaire: **Compagnie IBM FRANCE, 5 Place
   Vendôme, F-75000 Paris 1er (FR)**
(84) Etats contractants désignés: **FR**

(72) Inventeur: **Desblache, André, Le Petit Royaume
   Chemin du Col de l'Espagnol, F-06000 Nice (FR)**
   Inventeur: **Galand, Claude, 56, Avenue des
   Tuilières, F-06800 Cagnes Sur Mer (FR)**
   Inventeur: **Vermot- Gauchy, Robert, Domaine des
   Gardettes, F-06570 St. Paul (FR)**

(74) Mandataire: **Tubiana, Max, Compagnie IBM France
   Département de Propriété Industrielle, F-06610 La
   Gaude (FR)**

## Description

## DOMAINE TECHNIQUE

L'invention traite de la transmission numérique de signaux d'origine vocale et plus particulièrement de moyens permettant une utilisation efficace des voies de transmission.

## ETAT DE LA TECHNIQUE

Compte tenu du coût élevé des voies de transmission, il est particulièrement utile de disposer de moyens permettant de concentrer sur une même voie, ou canal, de transmission, le trafic concernant le plus grand nombre d'utilisateurs ou sources possible.

On constate qu'au cours d'une conversation téléphonique, chacun des interlocuteurs ne parle en fait que pendant une faible fraction du temps durant lequel il occupe la ligne. La majeure partie de ce temps d'occupation est en fait consacrée à l'écoute, aux silences entre mots et syllabes et aux pauses proprement dites. On peut alors parler d'inactivité de l'interlocuteur concerné. De nombreux systèmes de communication tirent profit de ces instants d'inactivité. Ainsi, par exemple, les systèmes dits TASI prévoient le rattachement à un même canal de transmission d'un nombre d'utilisateurs double de celui que l'on pourrait prévoir en tenant compte uniquement du rapport entre la vitesse de transmission possible sur ledit canal et le débit des codeurs associés aux utilisateurs. Pour de plus amples informations sur le procédé de transmission TASI, on pourra se reporter notamment à l'article de J. CAMPANELLA intitulé "Digital Speech Interpolation" et publié dans la revue "Comsat Technical Revue" vol. 6, no. 1, de 1976, pages 127 à 158. De ce qui précède, l'homme de l'art comprendra aisément que les systèmes TASI nécessitent, pour fonctionner, des moyens permettant de détecter les intervalles de temps durant lesquels les utilisateurs sont inactifs ou actifs au sens qu'on a donné à ce terme un peu plus haut. On parle alors de détection d'activité vocale. Malheureusement, ladite détection d'activité n'est pas simple à réaliser. En général, les méthodes de détection d'activité d'une source vocale donnée sont basées sur des mesures d'énergie du signal vocal durant des intervalles de temps courts. L'énergie mesurée durant chaque intervalle de temps est comparée à un seuil prédéterminé. La voix est déclarée présente et donc la source est dite active lorsque l'énergie mesurée dépasse le seuil. Dans le cas inverse, la source est considérée inactive (ce qui équivaut à un silence) durant l'intervalle de temps considéré.

Le problème technique réside essentiellement dans le choix du seuil. En effet, d'une part tous les utilisateurs d'un même système TASI ne parlent pas au même niveau, d'autre part les atténuations ou les pertes en ligne varient d'une ligne à une autre. Le choix d'un seuil trop élevé risquerait de dégrader les signaux vocaux de manière telle que leur reconstitution coté réception serait de mauvaise qualité. Par contre, le choix d'un seuil trop bas diminuerait sensiblement l'efficacité du système TASI.

Un objet de la présente invention est de fournir des moyens de détection d'activité conciliant à la fois l'efficacité et la qualité.

Plus précisement, l'invention s'applique à un système de transmission dans lequel le signal vocal de chaque source est échantillonné et codé numériquement par blocs d'échantillons à l'aide d'un codeur fournissant des informations sur l'énergie à court terme du signal. Ces informations permettent une prise de décision quant à l'état actif ou non actif de la source considérée grâce à un procédé comportant plusieurs étapes. A cet effet, le niveau de ladite énergie est tout d'abord comparé à celui du seuil, lequel seuil est ensuite réajusté en conséquence. Puis, ladite énergie est comparée à un niveau égal à $k$ fois le seuil ($k > 1$). Il en résulte soit une reconnaissance immédiate d'activité, soit une indication d'ambiguïté, laquelle ambiguïté est levée au cours d'une étape faisant intervenir une information relative à la variation du spectre de puissance à court terme d'un bloc d'échantillons de signal à un autre.

D'autres objets, caractéristiques et avantages de la présente invention ressortiront mieux de l'exposé qui suit fait référence aux dessins annexés à ce texte, qui représentent un mode de réalisation préféré de celle-ci.

## BREVE DESCRIPTION DES FIGURES

Figure 1: schéma bloc d'un système TASI.

Figure 2-4: schémas de codeurs connus dont la réalisation est basée sur l'utilisation des principes dits de prédiction linéaire.

Figure 5 et 6: schémas bloc de principe représentant les éléments communs aux codeurs et décodeurs à prédiction linéaire et utiles pour l'invention.

Figure 7 et 8 schémas de principe résumant le procédé de l'invention.

Figure 9: schéma bloc d'un dispositif de mise en oeuvre du procédé de l'invention.

## 0 127 718

### DESCRIPTION DETAILLEE DE L'INVENTION

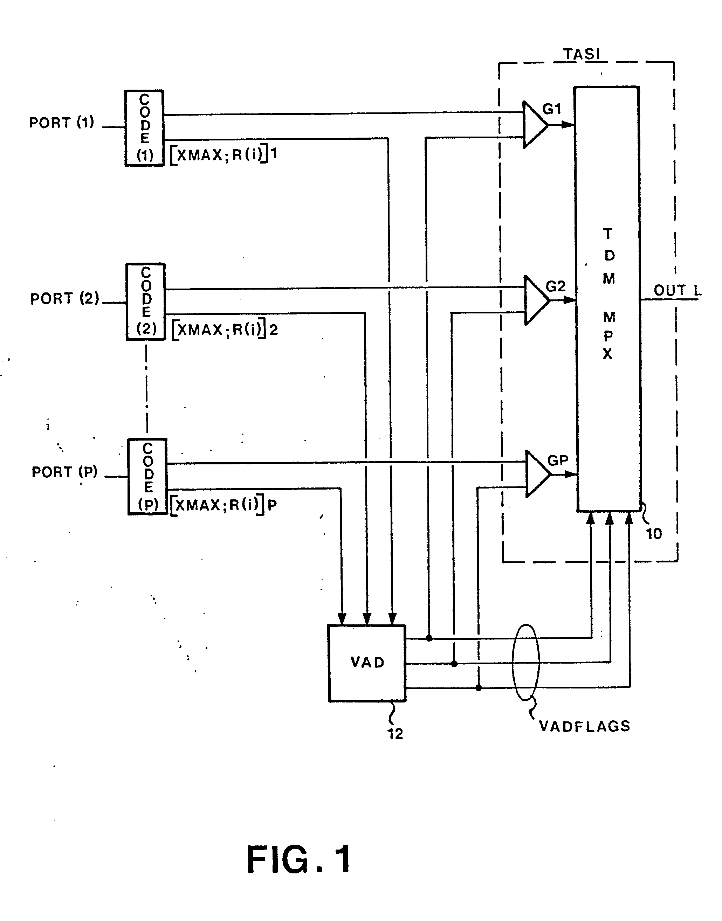

· La figure 1 représente le schéma bloc d'un système de type dit TASI (Time Assignment Speech Interpolation). P utilisateurs ou sources de signaux vocaux sont respectivement reliés à des codeurs (CODE 1, CODE 2,... , CODE P) à travers des canaux d'entrée aboutissant à des portes (PORT 1, PORT 2, ..., PORT P). Chaque codeur convertit le signal analogique d'origine vocale appliqué sur son entrée en données numériques. Les données des différents codeurs en fonctionnement sont destinées à être concentrées sur un même canal de transmission L pour être transmis vers une station de réception (non représentée). Coté récepteur(non représenté), les données doivent être redistribuées et orientées vers les destinataires. L'opération de concentration proprement dite est réalisée par un multiplexeur à division dans le temps (TDM MPX) 10. En principe, il n'y aurait pas de problème majeur d'affectation de la ligne L si le nombre P d'utilisateurs était choisi de manière telle que le nombre total de bits fournis par les P sources ne dépasse pas les capacités du canal de transmission correspondant à la ligne L. Toutefois, comme on l'a dit plus haut, un tel système serait peu efficace en ce qu'il négligerait d'exploiter au mieux les caractéristiques de la parole. Tel n'est pas le cas du TASI où le nombre P d'utilisateurs rattachés à un même système est volontairement choisi élevé eu égard à la capacité du canal L. En d'autres termes, en supposant que les P sources soient en fonctionnement simultanément, le multiplexeur et la ligne seraient incapables de gérer le trafic qui en résulterait, sans qu'il soit tenu compte des silences et autres causes d'inactivités. C'est la raison pour laquelle un Détecteur d'Activité Vocale (VAD) 12 est relié à la sortie de chacun desdits codeurs CODE1 à CODEP. Le VAD est chargé de balayer les sorties des codeurs de manière à identifier ceux que l'on peut considérer comme étant actifs et ouvrir la porte du groupe de portes G1 à GP correspondante. Le VAD 12 fournit aussi au multiplexeur les adresses des codeurs actifs, adresses à communiquer à la station de réception (non représentée) placée à l'autre extrémité de la ligne L. En pratique, cette communication d'adresses se fait, par simple insertion d'une information dite de drapeau (VADFLAGS) codée numériquement au sein du message mis en forme par le multiplexeur 10.

Le détecteur d'activité vocale (VAD) de l'invention est conçu non seulement de manière à ce qu'il puisse s'adapter à chaque utilisateur, mais en outre de manière à ce qu'il utilise au mieux les caractéristiques du type de codeur choisi. On a indiqué plus haut que la mesure d'activité nécessitait tout d'abord une connaissance de l'énergie fournie par chaque source vocale. Le choix du codeur utilisé minimise les opérations supplémentaires nécessaires à cet effet lorsque, en dehors de toute opération de recherche d'activité, les données fournies, par le codeur contiennent déjà l'information. Tel est le cas des codeurs dont la conception est basée sur la théorie de prédiction linéaire. Pour avoir des précisions sur cette famille de codeurs on pourra se reporter notamment à l'ouvrage de J. MARKEL et A.H. GRAY, publié en 1976 aux Editions Springer Verlag, New York, sous le titre "Linear Prediction of Speech".

On distingue, notamment, dans la famille des codeurs prédictifs, les codeurs dits prédictifs et adaptatifs (Adaptative Predictive Coders ou APC), les codeurs prédictifs à excitation vocale (Voice Excited Predictive Coders ou VEPC) et les vocodeurs à prédiction linéaire (Linear Predictive Vocoders ou LPC). A titre d'exemple on pourra se référer aux publications suivantes:

- "Adaptive Predictive Coding of Speech Signals" publié par B.S. ATAL et M.R. SCHROEDER, dans le Bell System Technical Journal, Vol. 49, pp 1973-1986, d'Octobre 1970;
- "9.6/7.2 Kbps Voice Excited Predictive Coder (VEPC)", présenté par D. ESTEBAN, C. GALAND, D. MAUDUIT et J. MENEZ, à la Conférence Internationale IEEE ICASSP, Tulsa, USA en avril 1978; et,
- "A Linear Prediction Vocoder Simulation Based on the Autocorrelation Method", publié par J.D. MARKEL et A.H. GRAY dans la revue IEEE Transaction on Acoustics, Speech and Signal Processing, Vol. ASSP-22, N°2, pp 124-134, d'avril 1974.

On notera en outre que l'on utilisera ici les techniques dites de codage par blocs d'échantillons dites techniques BCPCM. Dans les codeurs de type APC, le signal vocal est filtré dans un prédicteur optimal permettant d'obtenir notamment un signal dit d'excitation qui est ensuite quantifié. A la réception, le signal d'excitation sert à exciter un filtre. Les deux filtres cités ci-dessus sont de type numérique et adaptatifs. Leurs paramètres ou coefficients sont dérivés de l'analyse du signal vocal lui-même.

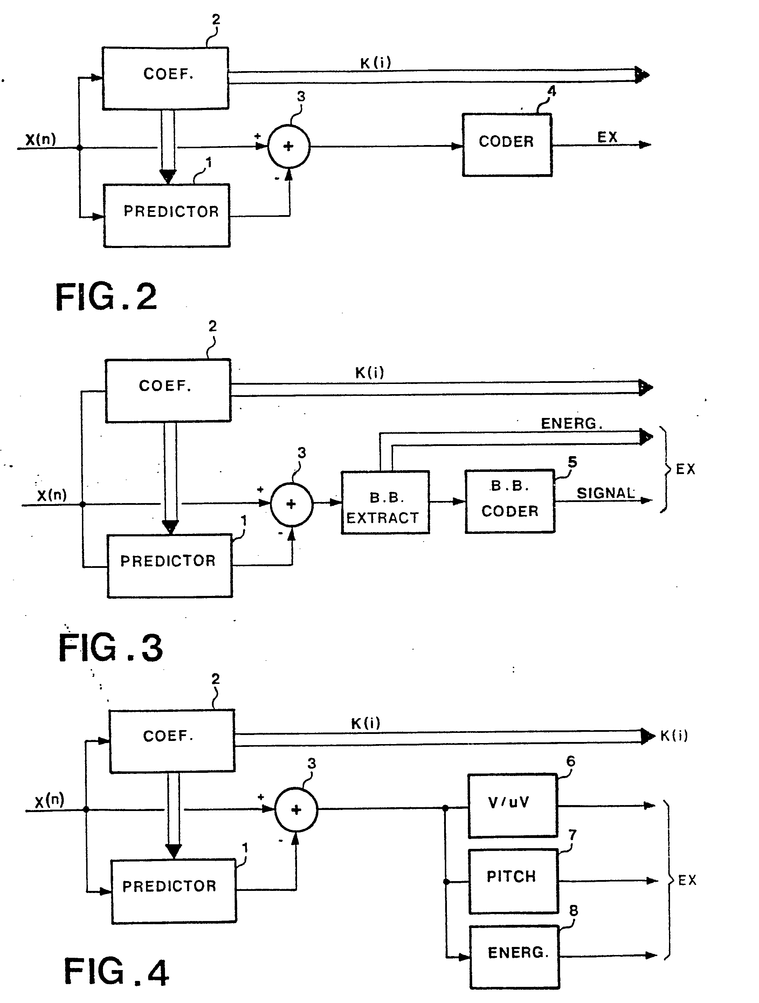

On a représenté sur la figure 2 un schéma bloc montrant les éléments de base d'un codeur de type APC. Les échantillons $x_{(n)}$ du signal vocal y sont traités par blocs de N échantillons pour déterminer les coefficients de prédiction $K(i)$ dans un dispositif 2. Ces coefficients servent à régler le filtre prédicteur 1 dont l'entrée reçoit les échantillons $x_{(n)}$ du signal vocal. Le signal d'excitation (ou signal résiduel) est ensuite obtenu par soustraction en 3 du signal prédit du signal vocal d'origine. Ledit signal d'excitation est ensuite codé en 4 avant d'être transmis. L'ensemble $K(i)$ et signal d'excitation codé suffit à définir le signal vocal d'origine.

Dans les codeurs de type VEPC, le signal d'excitation est approximé en ne conservant pour codage que les composantes basses fréquences (<1 KHz) ou bande de base du signal d'excitation. Un schéma bloc de codeur VEPC est représenté sur la figure 3. Ce qui distingue surtout ce codeur de celui de la figure 2 tient au fait que, si l'on ne retient en BB EXTRACT que la bande de base (BB) pour codage en 5 en une information SIGNAL, il faut en outre que le codeur délivre une information ENERG relative à l'énergie de la bande haute du signal d'excitation.

A la réception (donc dans le décodeur non représenté), les composantes de la bande haute éliminée sont synthétisées par distorsion non linéaire du signal résiduel en bande de base, filtrage passe haut et modulation par l'information d'énergie. Pour de plus amples informations sur le codage VEPC, on se reportera notamment au brevet Européen EP-B-0002998.

Un schéma bloc de codeur de type LPC est représenté sur la figure 4. Avec ce type de codeur prédictif, le signal d'excitation est scindé en trois parties; Autrement dit, il y est représenté par trois types d'informations. L'une (V/UV) codée en 6 est binaire et distingue entre sons voisés et sons non voisés. La seconde représente la valeur de la fréquence fondamentale si le son a coder est voisé. Dans ce cas, un mot de cinq bits codé en 7 peut suffir. Enfin, la dernière information est relative à l'énergie du signal d'excitation et peut être codée en 8 à l'aide de 4 bits par exemple. A la réception (dans le décodeur non représenté) le signal d'excitation est synthétisé soit à partir d'un train d'impulsions à la fréquence fondamentale, soit à partir d'un bruit blanc et ce, selon que le son concerné est voisé ou non.

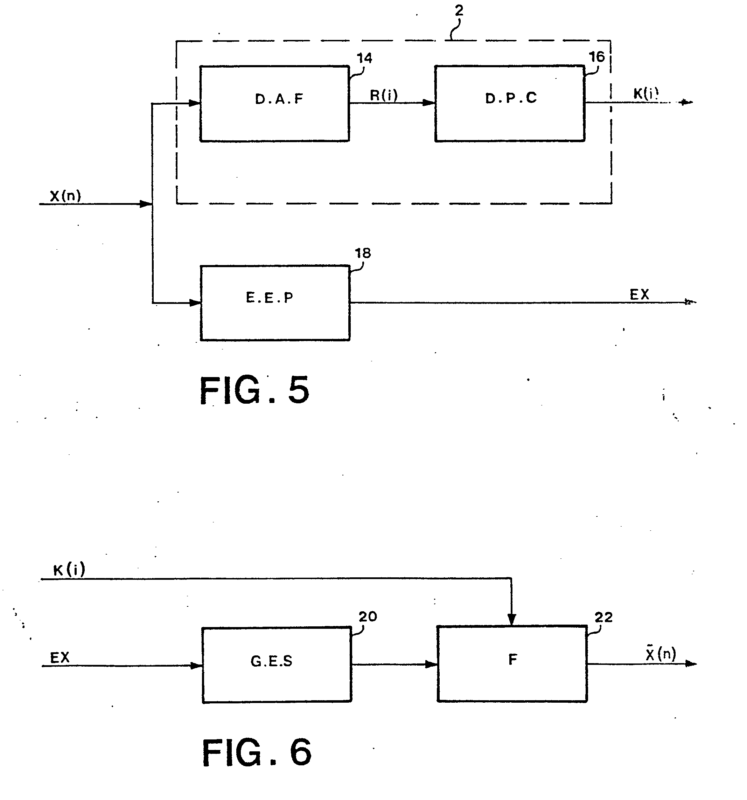

On constate donc bien que les trois types de codeurs décrits ci-dessus ont un certain nombre de caractéristiques communes. Ces caractéristiques ont été schématiquement représentées sur la figure 5 pour le codeur et sur la figure 6 pour le décodeur. En gros, coté codeur, dans les trois cas, le signal échantillonné est analysé par blocs de N échantillons $x_{(n)}$ en partant de l'hypothèse que le signal est quasi-stationnaire au sein d'un même bloc d'échantillons. La partie supérieure de l'analyseur peut comporter des moyens 14 d'étude de la fonction d'autocorrelation du signal vocal (DAF), lesquels moyens extraient du signal, une information spectrale représentée par des valeurs numériques R(i). Cette information spectrale, traitée dans un dispositif (DPC) 16 délivre les coefficients dits de prédiction K(i). L'ensemble des dispositifs 14 et 16 appartient au dispositif 2 des figures 2 à 4. Les moyens de détermination des termes R(i) et K(i) sont connus de l'homme de l'art et peuvent être retrouvés dans les documents cités plus haut.

Dans la partie inférieure du schéma de la figure 5 se trouvent les éléments 18 permettant d'extraire et de coder le signal dit d'excitation. Pour chaque type de codeur, le codage du signal d'excitation fournit des données relatives à des paramètres spécifiques. Avec le codeur de type LPC, le codage du signal d'excitation fournit une indication de valeur de la fréquence fondamentale; une indication voisée/non voisée; et une indication d'énergie. Avec un codeur de type APC, le signal d'excitation est directement codé numériquement (ou recodé de manière plus efficace qu'il ne l'était). Quant au codeur de type VEPC, son dispositif 18 inclut les moyens fournissant un signal en bande de base codé et une indication d'énergie en bande haute respectivement désignés par SIGNAL et ENERG dans le brevet Européen cité plus haut.

Pour ce qui est du décodeur (figure 6), on notera surtout que les paramètres du signal d'excitation sont utilisés en 20 pour reconstituer ledit signal d'excitation. Ce signal est ensuite utilisé pour exciter un filtre numérique 22 dont les coefficients sont ajustés par les coefficients de prédiction K(i). Les échantillons de voix reconstitués $x_{(n)}$ sortent du filtre 22.

Tous ces codeurs peuvent être utilisés pour réaliser une compression du signal vocal initialement codé à 64 Kbps (PCM CCITT) en un signal codé entre 2,4 et 32 Kbps. Le choix du taux de compression a naturellement une incidence sur la qualité du codage, donc sur la qualité de voix que l'on obtient au décodage. Pour plus de précision sur ces phénomènes on pourra se reporter à l'article intitulé "Speech Coding" publié par J.L. Flanagan, M.R. Schroeder, B.S. Atal, R.E. Crochiere, N.S. Jayant et J.M. Tribolet dans la revue IEEE trans. on Communications, Vol. COM-27, N° 4, pp 710-737 d'avril 1979. La compression accroît évidemment l'efficacité d'utilisation du canal de transmission. Mais l'emploi des techniques de l'invention vient doubler cette efficacité à un coût très raisonnable par son incorporation à un système de type TASI. Le coût est d'autant plus raisonnable que le détecteur d'activité de l'invention est conçu pour exploiter au mieux les moyens déjà existants dans les codeurs. Quant à la qualité du système TASI qui en résulte, elle est améliorée par une exploitation judicieuse desdits moyens existants pour, notamment, détecter et éliminer certains bruits ambiants qui, dans un système conventionnel, perturberaient la fonction détection d'activité.

En effet, le spectre de puissance à court terme d'un bloc d'échantillons est en relation directe avec la fonction d'autocorrélation du signal échantillonné. Tandis que l'amplitude du plus grand des échantillons d'un même bloc peut servir de base à une mesure approximative de l'énergie du signal ayant fourni le bloc d'échantillons. Or toutes ces informations sont disponibles à la sortie des codeurs dont l'emploi est préconisé ici. En effet, en utilisant ces codeurs pour un traitement selon les techniques dites BCPM (Block Companded PCM), on est amené à déterminer des coefficients dits caractéristiques ou factéurs d'échelle (C) représentant l'amplitude du (ou des) plus grand(s) échantillons de chaque bloc. En d'autres termes, pour chaque bloc de N échantillons, le codeur, indépendamment de toute considération de mesure d'activité, est amené à indiquer la valeur de l'échantillon le plus grand (XMAX).

$$C = XMAX = MAX (|x_{(n)}|)$$

On notera que toute information que l'on désignera ici par XM caractérisant l'énergie contenue dans un bloc d'échantillons peut être utilisée à la place de XMAX. Les coefficients C sont aussi utilisés en pratique pour normaliser le signal vocal avant même que soient effectuées les opérations de détermination des coefficients d'autocorrelation K(i).

Toutes les 20 ms (durée d'un segment ou tronçon de signal fournissant un bloc d'échantillons à l'entrée du codeur), et partant de l'information XMAX, le détecteur d'activité vocale (VAD) fonctionnera sur les principes suivants. Si XMAX est inférieur à un seuil prédéterminé, le seuil devra être réajusté rapidement; autrement, le réajustement de seuil sera réalisé progressivement au cours du traitement de plusieurs blocs. C'est cet ajustement qui sert à traquer des bruits ambiants de niveaux croissants.

Le second principe est basé sur une évaluation de la différence entre XMAX et le seuil. Plus précisément, si XMAX est substantiellement supérieur au seuil (c'est-à-dire XMAX > k. (seuil), avec k > 1), le bloc d'échantillons en cours de traitement est considéré comme issu d'un signal vocal; dans ce cas, le canal vocal relié à la porte concernée est dit "actif". Autrement, une ambiguité persiste qui doit être levée.

Les opérations de levée d'ambiguïté seront basées sur deux critères. Pour ce qui est du premier, il est basé sur le fait que lorsqu'un canal aura été jugé actif pour un bloc donné, on s'interdit de l'interrompre brusquement. Quant au second critère, il fait appel à des considérations spectrales, plus précisément aux variations du spectre de puissance à court terme du signal. Or ce spectre est lié à la fonction R(i). Donc on considérera le bloc d'échantillons en cours de traitement comme appartenant à une source "active" lorsque les variations de la fonction R(i) auront été significatives par rapport à la fonction R(i) prélevée en période d'inactivité. Dans le cas inverse, le signal correspondant est assimilé à du silence (canal ou source inactive).

Le délai d'attente avant interruption du canal actif (1er critère) qui est initialisé lorsqu'un canal aura été jugé actif, ne diminue pas de manière significative (moins de 5 %) le rendement du système TASI utilisant le détecteur d'activité de l'invention. Par contre, il établit un court pont (0,1 à 1 seconde par exemple) permettant de prendre notamment en considération les silences intersyllabiques se produisant au cours d'une conversation normale et dont la suppression serait particulièrement désagréable.

Quant aux ajustages de seuil combinés aux considérations d'évolutions spectrales, ils permettent d'éliminer les bruits ambiants stationnaires. Par exemple, lorsque l'utilisateur (source) parle dans un environnement bruyant, si un ventilateur proche est mis en fonctionnement produisant une énergie sonore importante, le détecteur d'activité de l'invention s'adaptera automatiquement à cette situation. Autrement dit, le détecteur sera capable de déceler, dans ce bruit, des sons d'origine vocale même de faible niveau (débuts de fricatives) et de rejeter les segments non vocaux.

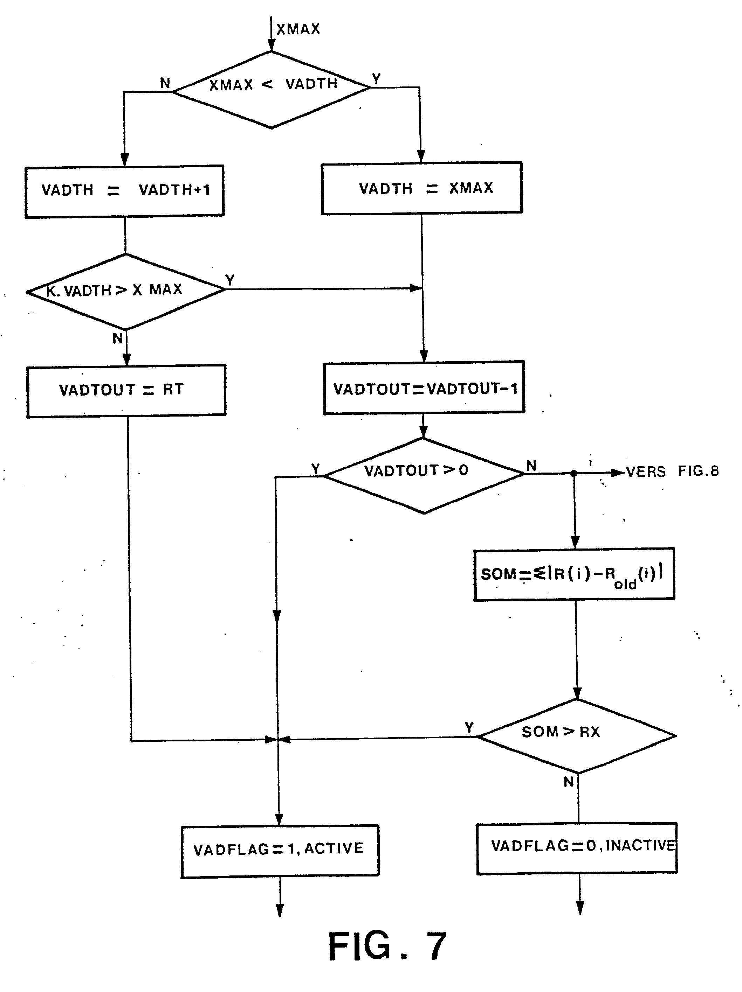

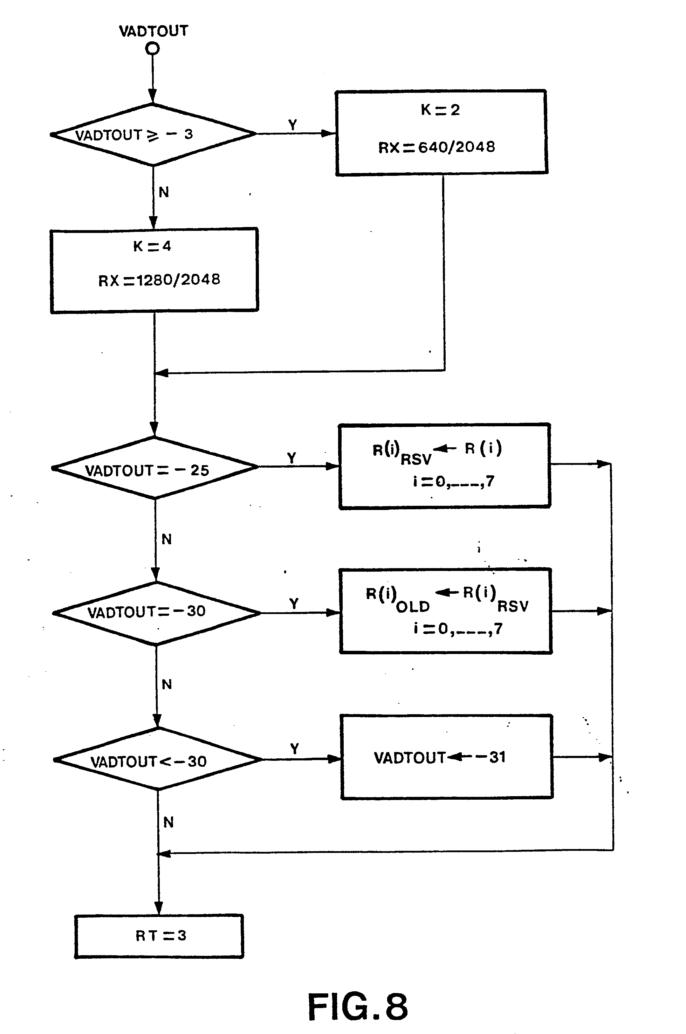

La figures 7 et 8 résument les étapes du procédé de l'invention. Elles résument surtout, pour une source donnée, les étapes du traitement d'un bloc d'échantillons, traitement destiné à décider si le segment de signal correspondant est à considérer comme provenant d'une source vocale active (donc à transmettre), ou au contraire, s'il provient d'une source que l'on doit considérer inactive (à ne pas transmettre).

Les coefficients d'autocorrélation R(i) ainsi que XMAX dérivant du bloc en cours de traitement sont mis en mémoire (non représentés), XMAX est soumis à une première comparaison avec un seuil d'amplitude désigné par VADTH initialement fixé empiriquement. Partant du résultat de cette comparaison, le seuil VADTH est dynamiquement ajusté. Plus précisément lorsque la comparaison indique que XMAX est inférieur à VADTH, le seuil est ramené à XMAX. Dans le cas inverse, le seuil est réajusté progressivement par addition d'un petit incrément (VADTH = VADTH + 1). On a choisi cet incrément d'amplitude égale à la valeur $\dfrac{1}{2^{11}}$ soit 1/2048.

Le test suivant est chargé de vérifier si XMAX est supérieur à k fois le seuil (k étant un coefficient numérique supérieur à 1, que l'on définira plus loin). Si tel est le cas, la source est dite active. On peut aussi dire que le bloc est actif. Dans ce cas, un bit dit de drapeau VADFLAG est porté à 1. Simultanément, un compteur d'attente avant interruption (VADTOUT) est chargé à une valeur prédéterminée RT. On pourra choisir cette valeur entre 3 et 50. Par contre, si XMAX n'est pas supérieur à k. VADTH, la situation est dite ambigüe. Autrement dit un test supplémentaire est nécessaire pour décider si la source concernée doit être considérée active ou inactive. Dans ce dernier cas, le contenu du compteur VADTOUT est réduit d'une unité et le contenu dudit compteur est testé. Tant que le contenu du compteur VADTH sera positif, le bloc en cours de traitement sera considéré comme provenant d'une source active.

Lorsque le contenu du compteur VADTOUT aura atteint zéro, il sera procédé au calcul d'un terme dit SOM traduisant la variation du spectre de puissance à court terme. Le calcul du spectre de puissance à court terme du signal peut être réalisé de différentes manières. Il peut notamment être basé sur l'utilisation des coefficients de prédiction K(i) ou sur celle des coefficients d'autocorrélation R(i). Dans ce dernier cas:

$$ SOM = \sum_{i=1}^{7} \left| R(i) - R_{old}(i) \right| $$

Les termes $R(i)_{old}$ sont des valeurs de R(i) appartenant à un bloc antérieur au bloc d'échantillons en cours de traitement. On décrira plus loin (voir Fig. 8) un mode de détermination des $Ri_{(old)}$.

On procède ensuite à la comparaison du terme SOM avec un second seuil RX fixé empiriquement. A titre d'exemple, ce seuil a été fixé à la valeur décimale 0,3 = 640/2048 ou à 0,6 = 1280/2048, comme on le verra plus loin.

Lorsque le terme SOM est supérieur à RX, le bloc est dit actif et correspondant à un cas où le drapeau VADFLAG est mis à 1. Dans le cas inverse, le drapeau est porté à zéro et la source est considérée inactive.

La figure 8 représente un mode du processus de détermination des $Ri_{(old)}$ ainsi que les paramètres mis en jeu dans ce processus. Tout dépend du contenu du compteur VADTOUT qui a été initialement chargé à RT = 3 lors de la détection du dernier bloc qui, sans ambiguïté a été classé "actif". Le processus de détermination de $R(i)_{old}$ comporte trois tests importants.

Le premier permet de donner une valeur aux variables k et RX qui permettent respectivement de tester le niveau de bruit et la variation de la fonction d'autocorrélation (voir Fig. 7).

5

Le second test permet de décider quand on doit prendre une image de la fonction d'autocorrélation provisoire R(i) RSV qui remplacera le jeu de coefficients R(i) et donc deviendra R(i)$_{old}$ quand le troisième test deviendra positif. Ceci permet d'éviter de prendre comme R(i)$_{old}$ la fonction d'autocorrelation d'un début d'activité vocale.

Le contenu du compteur VADTOUT, décrémenté d'une unité après détection de chaque bloc ambigu, est comparé à - 3. Si VADTOUT $\geq$ - 3, on force k à 2 et RX à 640/2048 = 0,3. Dans le cas inverse, k = 4 et RX = 1280/2048 = 0,6. Dés que VADTOUT atteint - 25, le système stocke les coefficients R(i) du bloc d'échantillons en cours de traitement. Ces coefficients sont désignés par R(i)$_{RSV}$. En pratique, on stockera des termes normalisés par rapport à R(O).

Tant que l'ambiguïté persiste, VADTOUT continue à être décrémenté. Lorsqu'il atteint - 30, les termes R(i)$_{RSV}$ sont mis dans une mémoire. Ils représentent alors les termes R(i)$_{old}$ à utiliser pour le calcul du terme SOM. La figure 8 montre la présence d'un autre test qui permet de limiter la décroissance du contenu de VADTOUT pour éviter un dépassement de capacité du compteur de VADTOUT. Cette limitation doit être < - 30.

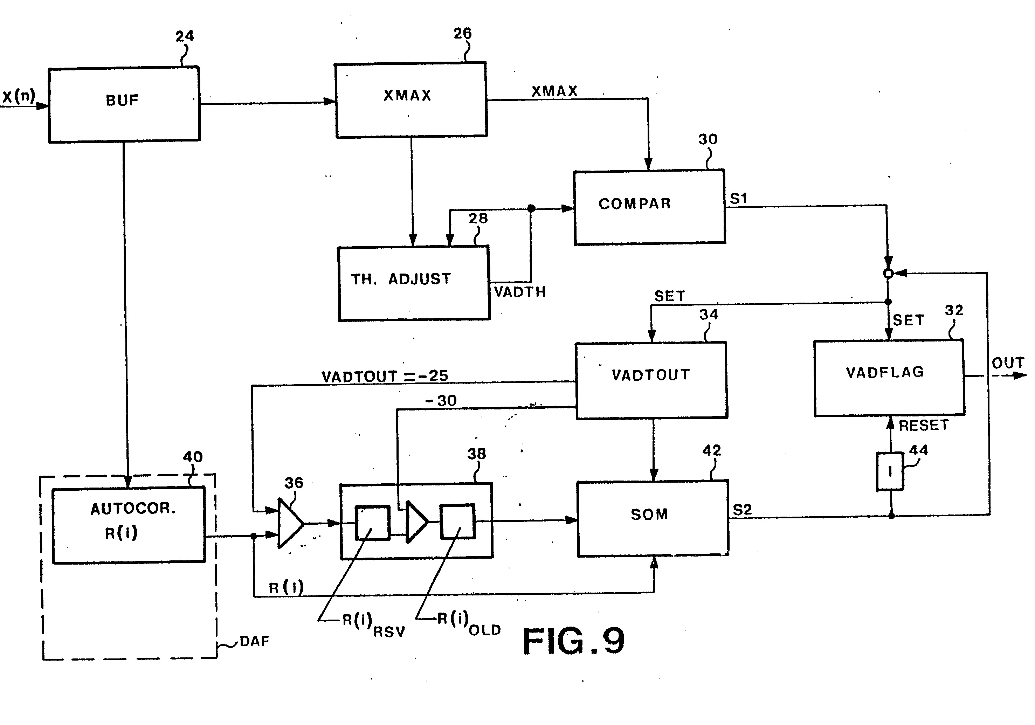

Un schéma bloc d'un mode de réalisation d'un dispositif de mise en oeuvre du procédé de l'invention est représenté sur la figure 9. Un registre tampon 24 sert à emmagasiner le bloc d'échantillons $x_{(n)}$ à traiter. En supposant que le signal d'origine ait été échantillonné à 8 KHz, chaque bloc représentant un tronçon de signal de 20 ms contiendrait 160 échantillons. Ces échantillons servent tout d'abord à déterminer en 26 la valeur de XMAX. En pratique, lorsque la réalisation est faite en arithmétique de type virgule fixe, cette fonction est déjà réalisée par ailleurs, notamment pour cadrer les échantillons. Il n'est alors pas nécessaire de refaire ces opérations pour le détecteur d'activité VAD.

La valeur de XMAX est ensuite chargée dans un dispositif d'ajustage de seuil 28 où elle est utilisée pour effectuer la première comparaison avec un seuil VADTH. La valeur de XMAX est ensuite comparée en 30 à k. VADTH (où k = 2 ou 4). Plus précisément, les opérations de test

$$XMAX - k \cdot VADTH < 0 \quad (1)$$

sont effectuées dans le dispositif 30.

Si le résultat du test représenté par l'expression (1) est négatif, la sortie S1 du comparateur 30 est portée au niveau logique un.

La bascule 32 destinée à traduire la valeur du drapeau VADFLAG est mise à l'état 1, par le bit S1 = 1, tandis que la valeur trois est chargée dans le compteur 34. Lorsque, par contre, la sortie S1 du comparateur 30 est portée au niveau logique zéro, traduisant un test (1) positif, le contenu du compteur 34 est diminué d'une unité. Lorsque le contenu du compteur 34 est égal à -25, un signal logique VADTOUT = 1 chargé de commander l'ouverture d'une porte 36 est émis. A ce moment, l'ouverture de la porte 36 permet le transfert des coefficients d'autocorrélation R(i) (ou plus précisément R(i)/R(O)) du bloc en cours de traitement, préalablement stockés dans une mémoire 40, vers une mémoire 38 destinée à emmagasiner les termes R(i)$_{old}$ ou plus exactement [R(i)/R(O)]$_{old}$. Ce transfert se fait par l'intermédiaire d'une mémoire tampon R(i)$_{RSV}$, et se trouve confirmé lorsque le compteur VADTOUT est égal à -30. Les termes R(i) n'ont naturellement pas à être engendrés pour le VAD puisqu'ils sont déjà disponibles dans le codeur.

Dès que le contenu du compteur 34 atteint zéro, les opérations de détermination de la variation de la fonction R(i), sont effectuées en 42. Le dispositif 42 calcule le terme SOM tel que:

$$SOM = \sum_{i=1}^{7} \left| \frac{R(i)}{R(0)} - \left(\frac{R(i)}{R(0)}\right)_{old} \right|$$

ce qui revient à déterminer l'amplitude de variation du spectre de puissance à court terme du signal traité. Le dispositif 42 compare aussi le terme SOM à une référence (seuil) de variation de spectre de puissance à court terme prédéterminée, égale à RT. Lorsque la réponse au test SOM > RT ? est affirmative, le niveau logique de la sortie S2 du dispositif 42 est porté à un. Le niveau S2 = 1 force le drapeau VADFLAG à un s'il ne l'était déjà. Par contre, si S2 = 0, ce niveau est inversé en 44 et force la bascule VADFLAG à zéro traduisant ainsi que la source des termes $x_{(n)}$ analysés doit être considérée inactive.

Le niveau logique de sortie OUT de la bascule VADFLAG commande les ouvertures et fermetures de l'une des portes G1 à GP (voir figure 1), tout en étant signalé au multiplexeur 10.

Bien que l'on ait décrit ci-dessus et représenté sur les figures un mode de réalisation préféré de l'invention, l'homme de l'art pourra, naturellement y apporter des modifications de forme ou de détails sans néanmoins sortir du cadre de l'invention. Tel est le cas par exemple lorsque l'on désire multiplexer des données binaires pures et un seul signal d'origine vocale codé numériquement auquel cas le détecteur d'activité VAD ne s'intéresse qu'à une seule source de signaux vocaux dont il est chargé de détecter les moments d'inactivité pour que lesdites données pures puissent être transmises à ces instants.

**Revendications**

1. Procédé de détection d'activité d'une source de signal d'origine vocale, ledit signal étant échantillonné et codé par blocs d'échantillons successifs, chaque bloc représentant un tronçon de signal de durée donnée, ledit codage fournissant notamment, pour chaque bloc, des informations relatives au spectre de puissance à court terme dudit signal, ledit procédé étant caractérisé en ce qu'il comprend pour chaque tronçon de signal les opérations suivantes:

a) choix d'un premier seuil d'amplitude VADTH;

b) traitement du bloc d'échantillons pour en déduire une information XM relative à l'énergie dudit tronçon de signal;

c) comparaison de XM au seuil VADTH et adaptation par ajustage du seuil en conséquence;

d) comparaison de XM au seuil ajusté multiplié par un facteur $k > 1$, pour en déduire que la source est active lorsque $XM > k.VADTH$ auquel cas un délai d'attente avant interruption est initialisé, ou dans le cas inverse pour en déduire qu'une ambiguïté persiste dont la levée impliquera une diminution du délai d'attente d'un intervalle de temps correspondant à la durée d'un tronçon de signal et une évaluation du délai restant, ladite évaluation étant interprétée comme signifiant que la source est active tant que le délai n'est pas écoulé ou qu'une ambiguïté persiste dont la levée implique:

- détermination d'une information dite de variation du spectre de puissance à court terme; et,
- comparaison de ladite information de variation de spectre de puissance avec un second seuil prédéterminé d'où l'on déduit que la source est inactive lorsque ladite variation est inférieure audit second seuil, autrement la source est considérée active.

2. Procédé de détection d'activité vocale destiné à un système numérique de transmission de type multiplex (TASI) à P sources dans lequel les signaux de chaque source reliée au système multiplex sont codés par blocs d'échantillons successifs $x_{(n)}$ représentant des tronçons de signal de durée donnée, ledit codage fournissant notamment, pour chaque bloc, des informations relatives au spectre de puissance à court terme du signal à transmettre, caractérisé en ce que ledit procédé destiné à distinguer entre source active et source inactive comprend pour chaque tronçon de signal les opérations suivantes:

a) choix d'un seuil d'amplitude VADTH;

b) traitement du bloc d'échantillons pour en déduire une information XM relative à l'énergie contenue dans le bloc;

c) comparaison de XM au seuil VADTH et ajustage du seuil en conséquence;

d) comparaison de XM au seuil ajusté multiplié par un facteur $k > 1$, pour en déduire une information indiquant que la source est active lorsque $XM > k.VADTH$ auquel cas un compteur est chargé, ou indiquant la persistance d'une ambiguïté dans le cas inverse laquelle ambiguïté est levée à l'aide des opérations suivantes:

- décroissance et test du contenu du compteur, le dit test soit levant le doute en faveur de l'activité, soit indiquant une persistance d'ambiguïté;
- détermination d'une information dite de variation du spectre de puissance à court terme; et,
- comparaison de ladite information de variation du spectre de puissance à court terme, avec un seuil prédéterminé de manière à lever ladite ambiguïté en fonction du résultat de ladite comparaison.

3. Procédé de détection d'activité selon l'une des revendications 1 ou 2 caractérisé en outre en ce que ledit ajustage de seuil VADTH est réalisé soit en forçant VADTH à la valeur de XM, soit en augmentant progressivement VADTH au cours du traitement de blocs successifs, selon le résultat de ladite comparaison des valeurs de XM et VADTH.

4. Procédé de détection d'activité selon la revendication 2 caractérisé en outre en ce que k est fixé à 2 ou 4 selon le contenu dudit compteur.

5. Procédé de détection d'activité selon la revendication 2 caractérisé en outre en ce que la valeur chargée dans ledit compteur est comprise entre 3 et 50.

6. Procédé de détection d'activité selon la revendication 4 caractérisé en outre en ce que ladite détermination de l'information de variation du spectre de puissance à court terme est déduite des coefficients dits d'autocorrélation R(i).

7. Procédé de détection d'activité selon la revendication 6 caractérisé en outre en ce que ledit codage du signal de chaque source est réalisé selon les techniques dites de prédiction linéaire.

8. Procédé de détection d'activité selon la revendication 7 caractérisé en outre en ce que ladite information relative à l'énergie contenue dans chaque bloc est représentée, par le terme caractéristique du bloc codé en BCPCM.

9. Procédé de détection d'activité selon l'une quelconque des revendications 2 à 8 caractérisé en outre en ce que la valeur du seuil auquel le spectre de puissance à court terme est comparé et ajusté à une première ou à une seconde valeur prédéterminée, selon le contenu dudit compteur.

**Claims**

1. A method of detecting the active condition of a source of voice signals, each of which is sampled and coded in the form of successive blocks of samples, with each of said blocks representing a signal segment of specific duration, the coding process providing in particular, for each block, information relating to the short-term power spectrum of said signal, said method being characterized in that it includes, for each signal segment, the steps of:

(a) selecting a first amplitude threshold VADTH,

(b) Processing the block of samples to derive therefrom an information item XM relating to the energy contents of said signal segment,

(c) comparing XM with threshold VADTH and adjusting said threshold accordingly,

(d) comparing XM with said threshold as adjusted and multiplied by a factor $k > 1$, and determining either that said source is active if $XM > k.VADTH$, in which case a delay prior to interruption of the transmissions is introduced, or, conversely, that there exists an ambiguity the elimination of which will necessitate reducing said delay by a time interval corresponding to the duration of a signal segment and evaluating the duration of the remaining portion of said delay, said evaluation being interpreted as meaning either that the source is active as long as said delay has not elapsed or that there remains an ambiguity the elimination of which will involve:

- determining an information item called short-term power spectrum variation, and

- comparing said short-term power spectrum variation information with a second predetermined threshold, to determine either that said source is inactive if said variation is less than said second threshold, or, if such is not the case, that the source is active.

2. A method of voice activity detection in a multiplex-type (TASI) digital transmission system comprising P sources wherein the signals from each source connected to the multiplex system are coded in the form of successive blocks of samples $x_{(n)}$ representing signal segments of predetermined duration, with the coding process providing in particular, for each block, information relating to the short-term power spectrum of the signal to be transmitted, characterized in that said method intended to allow an active source to be distinguished from an inactive one includes the steps of:

(a) selecting an amplitude threshold VADTH,

(b) processing a block of samples to derive therefrom an information item XM relating to the energy contents of the block,

(c) comparing XM with said threshold VADTH and adjusting the threshold accordingly,

(d) comparing XM with the threshold as adjusted and multiplied by a factor $k > 1$ to derive therefrom an information item indicating either that the source is active if $XM > k.VADTH$, in which case a counter is loaded, or, if such is not the case, that there remains an ambiguity which can be eliminated by:

- decrementing and testing the contents of the counter, the result of said testing step confirming either that the source is active or that the ambiguity persists,

- determining an information item called short-term power spectrum variation, and

- comparing said short-term power spectrum variation with a predetermined threshold to remove said ambiguity as a function of the result of said comparison.

3. A method of activity detection according to claim 1 or 2, further characterized in that said adjustment of said threshold VADTH is achieved either by forcing VADTH to the value of XM, or by progressively increasing VADTH while processing successive blocks, depending upon the result of said comparison of the values of XM and VADTH.

4. A method of activity detection according to claim 2, further characterized in that the value of k is set to 2 or 4 depending upon the contents of said counter.

5. A method of activity detection according to claim 2, further characterized in that the value loaded in said counter lies in the range from 3 to 50.

6. A method of activity detection according to claim 4, further characterized in that said short-term power spectrum variation information is derived from autocorrelation coefficients R(i).

7. A method of activity detection according to claim 6, further characterized in that said coding of the signals from each source is performed in accordance with linear prediction techniques.

8. A method of activity detection according to claim 7, further characterized in that said information relating to the energy contents of each block is represented by the characteristic term of the BCPCM-coded block.

9. A method of activity detection according to any one of claims 2 to 8, further characterized in that the threshold value with which the short-term power spectrum is compared, is set to a first or a second predetermined value depending upon the contents of said counter.

**Patentansprüche**

1. Verfahren zum Erkennen der Aktivität einer Signalquelle von vokalem Ursprung, wobei das ganannte Signal in aufeinanderfolgenden Blöcken von Abtastwerten erfaßt und kodiert wird, jeder Block einen Signalabschnitt von vorgegebener Dauer darstellt, die genannte Codierung insbesondere für jeden Block Informationen über das kurzfristige Leistungsspektrum des genannten Stimmensignals liefert und das genannte Verfahren dadurch gekennzeichnet ist, dass es für jeden Signalabschnitt folgende Schritte aufweist:

a) Auswahl einer ersten Amplitudenschwelle VADTH;

b) Verarbeitung des Abtastwertenblocks, um daraus eine Information XM bezüglich der Energie des genannten Signalabschnittes abzuleiten;,

c) Vergleich von XM mit der Schwelle VADTH und entsprechende Anpassung durch Einstellung des Schwellenwertes;

d) Vergleich von XM mit dem eingestellten, durch einen Faktor k > 1 multiplizierten Schwellenwert, um daraus zu schliessen, dass die Quelle aktiv ist, wenn XM > k.VADTH, in welchem Falle eine Wartezeit vor der Unterbrechung initialisiert wird, oder, im umgekehrten Falle, um daraus zu schliessen, dass eine Zweideutigkeit bestehen bleibt, deren Aufhebung eine Verminderung der Wartezeit um eine bestimmte Zeitspanne bedeutet, die der Dauer des Signalabschnittes und einer Bewertung der verbleibenden Frist entspricht, wobei die genannte Bewertung dahingehend ausgelegt wird, dass die Quelle aktiv ist solange die Frist nicht abgelaufen ist oder dass eine Zweideutigkeit besteht, deren Aufhebung erfordert :

- Festlegung einer Information, kurzfristige Änderung des Leistungsspektrums genannt, und

- Vergleich der genannten Information zur kurzfristigen Änderung des Leistungsspektrums mit einem zweiten vorgegebenen Schwellenwert, woraus hervorgeht, dass die Quelle inaktiv ist, wenn die genannte Änderung unter dem genannten zweiten Schwellenwert liegt, da die genannte Quelle sonst als aktiv angesehen werden würde.

2. Verfahren zur Erkennung einer vokalen Aktivität, für ein digitales Übermittlungssystem vom Multiplextyp (TASI) mit P Quellen ausgelegt, in dem die mit dem Multiplexsystem verbundenen Signale jeder Quelle in aufeinanderfolgenden Blöcken von Abtastwerten $x_{(n)}$ kodiert werden, welche Signalabschnitte von vorgegebener Dauer darstellen, wobei die genannte Codierung insbesondere für jeden Block Informationen über das kurzfristige Leistungsspektrum des zu übermittelnden Stimmensignals enthält und das genannte Verfahren, das dafür ausgelegt ist, zwischen einer aktiven und einer inaktiven Signalquelle zu unterscheiden, für jeden Signalabschnitt folgende Schritte aufweist:

a) Auswahl einer Amplitudenschwelle VADTH;

b) Verarbeitung des Abtastwertenblocks, um daraus eine Information XM bezüglich der Energie im genannten Signalabschnitt abzuleiten;,

c) Vergleich von XM mit der Schwelle VADTH und entsprechende Anpassung durch Einstellung des Schwellenwertes;

d) Vergleich von XM mit dem eingestellten, durch einen Faktor k > 1 multiplizierten Schwellenwert, um daraus zu schliessen, dass die Quelle aktiv ist, wenn XM > k.VADTH, in welchem Falle ein Zähler geladen wird, oder im umgekehrten Falle, um daraus zu schliessen, dass eine Zweideutigkeit besteht, deren Aufhebung folgende Schritte erfordert:

- Heruntersetzung und Test des Zählerinhaltes, wobei dieser Test einen Zweifel bezüglich der Aktivität hebt oder das Fortbestehen der Zweideutigkeit anzeigt,

- Festlegung einer Information, kurzfristige Änderung des Leistungsspektrums genannt, und

- Vergleich der genannten Information zur kurzfristigen Änderung des Leistungsspektrums mit einem zweiten vorgegebenen Schwellenwert, um die genannte Zweideutigkeit im Verhältnis zum Ergebnis des genannten Vergleiches aufzuheben.

3. Verfahren zum Erkennen der Aktivität nach einem der Ansprüche 1 oder 2, weiter dadurch gekennzeichnet, dass das genannte Einstellen des Schwellenwertes VADTH dadurch erreicht wird, dass VADTH willkürlich auf den Wert von XM gebracht wird, oder dass VADTH im Laufe der Verarbeitung der aufeinanderfolgende Datenblöcke allmählich erhöht wird, was vom Ergebnis des genannten Vergleiches zwischen den Werten von XM und VADTH abhängt.

4. Verfahren zum Erkennen der Aktivität nach Anspruch 2, weiter dadurch gekennzeichnet, dass k je nach dem Inhalt des genannten Zählers auf 2 oder 4 festgelegt wird.

5. Verfahren zum Erkennen der Aktivität nach Anspruch 2, weiter dadurch gekennzeichnet, dass der in den genannten Zähler geladene Wert zwischen 3 und 50 liegt.

6. Verfahren zum Erkennen der Aktivität nach Anspruch 4, weiter dadurch gekennzeichnet, dass die genannte Festlegung der Information bezüglich der Änderung des kurzzeitigen Leistungsspektrums aus den Faktoren, Autokorrelation R(i) genannt, abgeleitet werden.

7. Verfahren zum Erkennen der Aktivität nach Anspruch 6, weiter dadurch gekennzeichnet, dass die genannte Codierung des Signals jeder Quelle nach der Technik der sogenannten linearen Vorhersage durchgeführt wird.

8. Verfahren zum Erkennen der Aktivität nach Anspruch 7, weiter dadurch gekennzeichnet, dass die genannte Information bezüglich der in jedem Block enthaltenen Energie durch das kennzeichnende Glied des in BCPCM codierten Blockes dargestellt wird.

9. Verfahren zum Erkennen der Aktivität nach allen Ansprüchen 2 bis 8, weiter dadurch gekennzeichnet, dass der Schwellenwert, mit dem das kurzfristige Leistungsspektrum verglichen wird, je nach dem Zählerinhalt auf einen vorgegebenen ersten oder zweiten Wert eingestellt wird.

FIG. 1

FIG.2

FIG.3

FIG.4

3

FIG. 5

FIG. 6

XMAX

XMAX < VADTH

N ← → Y

VADTH = VADTH+1

VADTH = XMAX

K.VADTH > X MAX

Y →

N

VADTOUT = RT

VADTOUT = VADTOUT−1

VADTOUT > 0

Y

N →

i → VERS FIG.8

$SOM = \leq |R(i) - R_{old}(i)|$

SOM > RX

Y

N

VADFLAG = 1, ACTIVE

VADFLAG = 0, INACTIVE

# FIG. 7

FIG.8

9

FIG.9